(19) Europäisches Patentamt
European Patent Office
Office européen des brevets

(11) Veröffentlichungsnummer: **0 349 848 B1**

(12) **EUROPÄISCHE PATENTSCHRIFT**

(45) Veröffentlichungstag der Patentschrift: **21.04.93**

(51) Int. Cl.$^5$: **C09B 62/002**, D06P 1/38

(21) Anmeldenummer: **89111418.3**

(22) Anmeldetag: **23.06.89**

Die Akte enthält technische Angaben, die nach dem Eingang der Anmeldung eingereicht wurden und die nicht in dieser Patentschrift enthalten sind.

(54) **Triphendioxazin-Farbstoffe.**

(30) Priorität: **06.07.88 DE 3822850**

(43) Veröffentlichungstag der Anmeldung:
**10.01.90 Patentblatt 90/02**

(45) Bekanntmachung des Hinweises auf die Patenterteilung:
**21.04.93 Patentblatt 93/16**

(84) Benannte Vertragsstaaten:
**CH DE FR GB LI**

(56) Entgegenhaltungen:
**EP-A- 0 158 882**
**EP-A- 0 212 635**

(73) Patentinhaber: **BAYER AG**
**W-5090 Leverkusen 1 Bayerwerk(DE)**

(72) Erfinder: **Jäger, Horst, Dr.**
**Carl-Rumpff-Strasse 37**
**W-5090 Leverkusen 1(DE)**
Erfinder: **Wolff, Joachim, Dr.**
**Schlinghofener Strasse 38**
**W-5068 Odenthal(DE)**

**EP 0 349 848 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Triphendioxazin-Farbstoffe der Formel

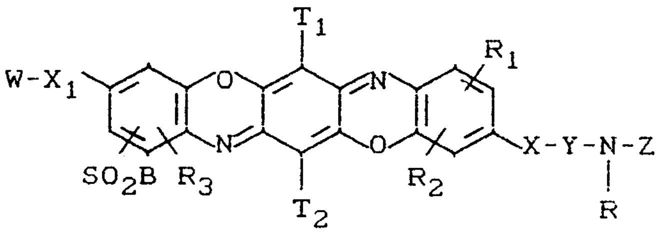

(2)

worin

B = $CH=CH_2$ oder $CH_2CH_2V$, worin

V = abspaltbare Gruppe wie $OSO_3H$, Cl, $S_2O_3H$, $OCOCH_3$: $OPO_3H_2$; $-^{\oplus}N(CH_3)_3$

R = H oder gegebenenfalls substituiertes $C_1$-$C_4$-Alkyl,

Z = faserreaktiver Rest

$T_1$ und $T_2$ für H, Cl, Br, $C_1$-$C_4$-Alkoxy, $C_1$-$C_4$-Alkyl, gegebenenfalls substituiertes Phenyl oder Phenoxy stehen, wobei $T_1$ und $T_2$ bevorzugt gleiche Bedeutung haben,

X und $X_1$ für O, S oder

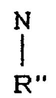

steht,

R" für Wasserstoff, oder gegebenenfalls substituiertes $C_1$-$C_4$-Alkyl steht und für den Fall, daß Y einen gegebenenfalls substituierten zweiwertigen aliphatischen Rest bedeutet, zusammen mit R auch für Alkylen, vorzugsweise $-CH_2CH_2-$ steht, und für den Fall, daß W einen aliphatischen Rest bedeutet zusammen mit W gegebenenfalls unter Einschluß eines Heteroatoms einen Ring bilden kann,

Y für einen gegebenenfalls weitersubstituierten zweiwertigen aliphatischen, araliphatischen, cycloaliphatischen oder aromatischen Rest steht,

W für H oder einen gegebenenfalls weitersubstituierten aliphatischen, araliphatischen, cycloaliphatischen oder aromatischen Rest steht,

$R_1$ eine wasserlöslichmachende Gruppe wie eine Carboxy- oder Sulfogruppe oder eine Sulfamoylgruppe ist, die mono- oder disubstituiert sein kann, wobei die Substituenten vorzugsweise Alkylgruppen von 1 bis 4 C-Atomen, die durch einen Phenylrest substituiert sein können, und Phenylreste sind, wobei diese Reste wiederum bevorzugt wasserlöslichmachende Gruppen enthalten können, oder eine Disulfimidgruppe - $SO_2NHSO_2R_4$ ist, wobei $R_4$ für einen gegebenenfalls substituierten $C_1$-$C_4$-Alkylrest oder Phenylrest stellt, oder eine Sulfongruppe $-SO_2R_4$ ist.

$R_2$ und $R_3$ stehen für H, $C_1$-$C_4$-Alkyl, $C_1$-$C_4$-Alkoxy, Carboxy, F, Cl oder Br.

Die Reste $SO_2B$ bzw. $R_1$ stehen jeweils in o-Stellung zum Substituenten $X_1$-W bzw.

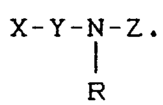

Aus der EP-A-0 212 635 sind bereits Triphendioxazinreaktivfarbstoffe bekannt, die aber anwendungstechnische Nachteile aufweisen.

Als Substituenten für R = gegebenenfalls substituiertes $C_1$-$C_4$-Alkyl kommen vorzugsweise in Frage: OH, $OCH_3$, COOH, $SO_3H$, $OSO_3H$.

Beispiele für R sind: $CH_3$, $C_2H_5$, n-$C_3H_7$, n-$C_4H_9$, die durch OH, $OCH_3$, COOH, $SO_3H$ oder $OSO_3H$ substituiert sein können. Substituenten der gegebenenfalls substituierten Phenyl- und Phenoxyreste $T_1$ bzw. $T_2$ sind z.B. Cl, $CH_3$, $C_2H_5$, $OCH_3$ und $OC_2H_5$.

Die Reste Y tragen, falls sie weitersubstituiert sind, vorzugsweise folgende weitere Substituenten: $SO_3H$, $OSO_3H$, COOH, $CH_3$, $OCH_3$, gegebenenfalls substituiertes Phenyl. Weiterhin können die araliphatischen, aliphatischen oder cycloaliphatischen Reste Y durch Heteroatome oder Heteroatomgruppen oder durch die Phenylgruppierung unterbrochen sein. Beispielhaft seien genannt: O, S, NH, $N(COCH_3)$.

a) Aromatische Reste Y sind beispielsweise folgende:

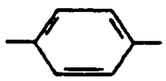 , 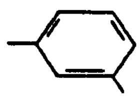 , 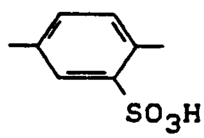 , 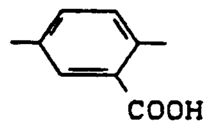 ,

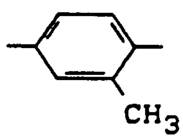 , 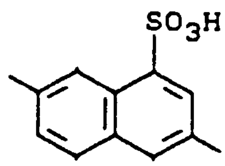

b) Araliphatische Reste Y sind beispielsweise folgende:

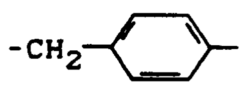 , 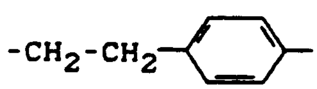 , 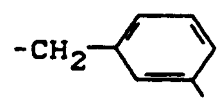 ,

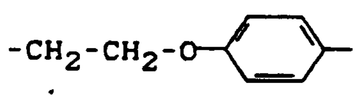
.

c) Aliphatische bzw. cycloaliphatische Reste Y sind beispielsweise folgende:

$-(CH_2)-_{2-6}$, 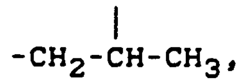, 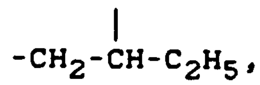, 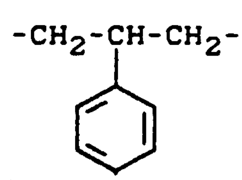,

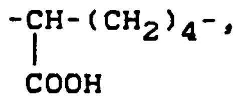, $-CH_2-CH_2-O-CH_2-CH_2-$, $-CH_2-CH_2-S-CH_2-CH_2-$,

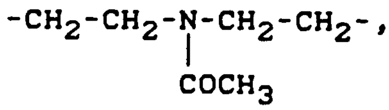, 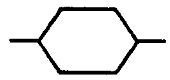, 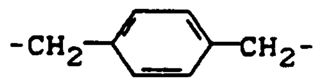,

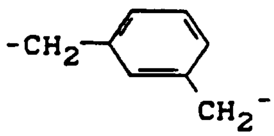, 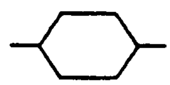, 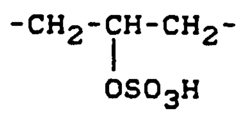

Ein geeigneter Rest

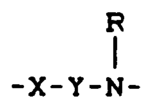

ist insbesondere auch

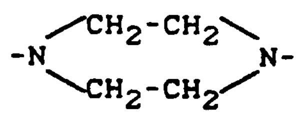

Die Reste W tragen, falls sie weitersubstituiert sind, vorzugsweise folgende Substituenten: $SO_3H$, $OSO_3H$, COOH, $CH_3$, $OCH_3$, Cl. Weiterhin können die aliphatischen, araliphatischen oder cycloaliphatischen Reste W durch Heteroatome oder Heteroatomgruppen unterbrochen sein. Beispielhaft seien genannt: O, S, NH.

a) Aromatische Reste W sind beispielsweise folgende:

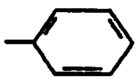 , 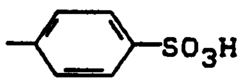 , 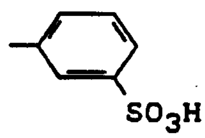 , 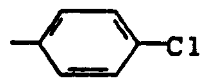 ,

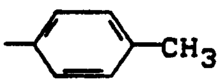 , 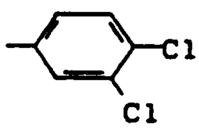 , 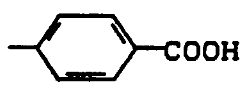 ,

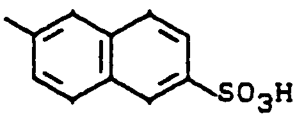

b) Araliphatische Reste W sind beispielsweise folgende:

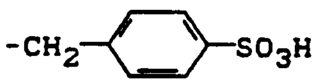 , 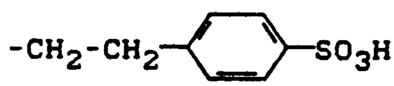

c) Aliphatische bzw. cycloaliphatische Reste W sind beispielsweise folgende:

$-CH_3$, $-C_2H_5$, $-CH_2-CH_2-OSO_3H$, $-CH_2-CH_2-SO_3H$,

$-CH_2-CH_2-O-CH_2-CH_2-OSO_3H$, $-CH_2-COOH$,
$-(CH_2)_2-NHCO-(CH_2)_2-COOH$,

$-CH_2-CH_2-CH_2-CH_2-OSO_3H$, $-CH_2-CH_2-CH_2-CH_2-SO_3H$,

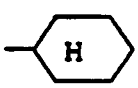 , 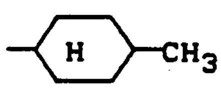

Geeignete Reste W-$X_1$- sind insbesondere auch

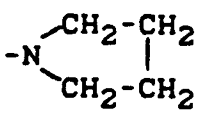 , 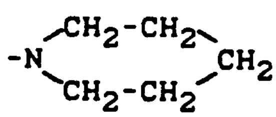 , 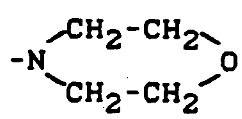 ,

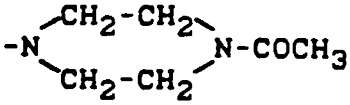

Geeignete Reste $R_4$ sind beispielsweise:

$-CH_3$, $-C_2H_5$, 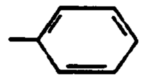 , 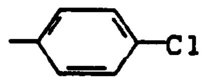 , $-(CH_2)_4Cl$ ,

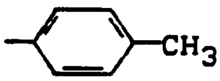

Geeignete faserreaktive Reste, d.h. solche die mit den OH-oder NH-Gruppen der Faser unter Färbebedingungen unter Ausbildung kovalenter Bindungen reagieren, sind insbesondere solche, die mindestens einen reaktiven Substituenten an einen 5- oder 6-gliedrigen aromatischheterocyclischen Ring gebunden enthalten, bspw. an einen Monoazin-, Diazin- oder Triazinring, insbesondere einen Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatisch-carbocyclische Ringe aufweist, bspw. ein Chinolin-, Phthalazin-, Cinnolin-, Chinazolin-, Chinoxalin-, Acridin-, Phenazin-und Phenanthridin-Ring-System.

Unter den reaktiven Substituenten am Heterocyclus sind beispielsweise zu erwähnen Halogen (Cl, Br oder F), Ammonium einschließlich Hydrazinium, Pyridinium, Picolinium, Carboxypyridinium, Sulfonium, Sulfonyl, Azido-($N_3$), Rhodanido, Thiolether, Oxiether, Sulfinsäure und Sulfonsäure.

Im einzelnen sind beispielsweise zu nennen:

2,4-Difluortriazinyl-6-, 2,4-Dichlortriazinyl-6-, Monohalogen-sym.-triazinylreste, insbesondere Monochlor- und Monofluortriazinylreste, die durch Alkyl, Aryl, Amino, Monoalkylamino, Dialkylamino, Aralkylamino, Arylamino, Morpholino, Piperidino, Pyrrolidino, Piperazino, Alkoxy, Aryloxy, Alkylthio, Arylthio substituiert sind, wobei Alkyl vorzugsweise gegebenenfalls substituiertes $C_1$-$C_4$-Alkyl, Aralkyl vorzugsweise gegebenenfalls substituiertes Phenyl-$C_1$-$C_4$-alkyl und Aryl vorzugsweise gegebenenfalls substituiertes Phenyl oder Naphthyl bedeutet und wobei bevorzugte Substituenten für Alkyl Halogen, Hydroxy, Cyan, Vinylsulfonyl, substituiertes Alkylsulfonyl, Dialkylamino, Morpholino, $C_1$-$C_4$-Alkoxy, Vinylsulfonyl-$C_2$-$C_4$-Alkoxy, substituierte Alkylsulfonyl-$C_2$-$C_4$-Alkoxy, Carboxy, Sulfo oder Sulfato sind und für Phenyl und Naphthyl, Sulfo, $C_1$-$C_4$-Alkyl, $C_1$-$C_4$-Alkoxy, Carboxy, Halogen, Acylamino, Vinylsulfonyl, substituiertes Alkylsulfonyl, Hydroxy, Amino.

Im einzelnen seien folgende Reste genannt:

2-Amino-4-fluor-triazinyl-6, 2-Methylamino-4-fluortriazinyl-6, 2-Ethylamino-4-fluortriazinyl-6, 2-Isopropylamino-4-fluor-triazinyl-6, 2-Dimethylamino-4-fluortriazinyl-6, 2-Diethylamino-4-fluor-triazinyl-6, 2-β-Methoxy-ethylamino-4-fluor-triazinyl-6, 2-β-Hydroxyethylamino-4-fluor-triazinyl-6, 2-Di-(β-hydroxyethylamino)-4-fluor-triazinyl-6, 2-β-Sulfoethylamino-4-fluor-triazinyl-6, 2-β-Sulfoethyl-methylamino-4-fluortriazinyl-6, 2-Carboxymethylamino-4-fluor-triazinyl-6, 2-Di-(carboxymethylamino)-4-fluor-triazinyl-6, 2-Sulfomethyl-methylamino-4-fluor-triazinyl-6, 2-β-Cyanethylamino-4-fluor-triazinyl-6, 2-Benzylamino-4-fluor-triazinyl-6, 2-β-Phenylethylamino-4-fluor-triazinyl-6, 2-Benzyl-methylamino-4-fluor-triazinyl-6, 2-(4'-Sulfobenzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2',5'-Disulfophenyl)-amino-4-fluor-triazinyl-6, 2-(o-, m-, p-Chlorphenyl)-amino-4-fluor-triazinyl-6, 2-(o-, m-, p-Methoxyphenyl)-amino-4-fluor-triazinyl-6, 2-(2'-Methyl-4'-sulfophenyl)-amino-4-fluor-triazinyl-6, 2-(2'-Methyl-5'-sulfophenyl)-amino-4-fluor-triazinyl-6, 2-(2'-Chlor-4'-sulfophenyl)-amino-4-fluor-triazinyl-6, 2-(2'-Chlor-5'-sulfophenyl)-amino-4-fluor-triazinyl-6, 2-(2'-Methoxy-4'-sulfophenyl)-amino-4-fluor-triazinyl-6, 2-(o-, m-, p-Carboxyphenyl)-amino-4-fluor-triazinyl-6, 2-(2',4'-Disulfophenyl)-amino-4-fluor-triazinyl-6, 2-(3'-5'-Disulfophenyl)-amino-4-fluor-triazinyl-6, 2-(2'-Carboxy-4'-sulfophenyl)-amino-4-fluor-triazinyl-6, 2-(2'-Carboxy-5'-sulfophenyl)-amino-4-fluor-triazinyl-6, 2-(6'-Sulfonaphthyl-(2'))-amino-4-fluor-triazinyl-6, 2-(4',8'-Disulfonaphthyl-(2'))-amino-4-fluor-triazinyl-6, 2-(6',8'-Disulfonaphthyl-(2'))-amino-4-fluor-triazinyl-6, 2-(N-methyl-N-phenyl)-amino-4-fluor-triazinyl-6, 2-(N-Ethyl-N-phenyl)-amino-4-fluor-triazinyl-6, 2-(N-β-Hydroxyethyl-N-phenyl)-amino-4-fluor-triazinyl-6, 2-(N-iso-Propyl-N-phenyl)-amino-4-fluor-triazinyl-6, 2-Morpholino-4-fluortriazinyl-6, 2-Piperidino-4-fluor-triazinyl-6, 2-(4',6',8'-Trisulfonaphthyl-(2'))-amino-4-fluor-triazinyl-6, 2-(3',6',8'-Trisulfonaphthyl-(2'))-amino-4-fluor-triazinyl-6, 2-(3',6'-Disulfonaphthyl-(1'))-amino-4-fluor-triazinyl-6, N-Methyl-N-(2,4-dichlortriazinyl-6)-carbamyl-, N-Methyl-N-(2-methylamino-4-chlortriazinyl-6)-carbamyl-, N-Methyl-N-(2-dimethylamino-4-chlortriazinyl-6)-carbamyl-, N-Methyl-bzw. N-Ethyl-N-(2,4-dichlortriazinyl-6)-aminoacetyl-, 2-Methoxy-4-fluor-triazinyl-6, 2-Ethoxy-4-fluor-triazinyl-6, 2-Phenoxy-4-fluor-triazinyl-6, 2-(o-, m-oder p-Sulfophenoxy)-4-fluor-triazinyl-6, 2-(o-, m-oder p-Methyl-oder -Methoxy-phenoxy)-4-fluor-triazinyl-6, 2-β-Hydroxyethylmercapto-4-fluor-triazinyl-6, 2-Phenylmercapto-4-fluor-triazinyl-6, 2-(4′-Methylphenyl)-mercapto-4-fluortriazinyl, 2-(2′,4′-Dinitrophenyl)-mercapto-4-fluor-triazinyl-6, 2-Methyl-4-fluor-triazinyl-6, 2-Phenyl-4-fluor-triazinyl-6 sowie die entsprechenden 4-Chlor- bzw. 4-Brom-Triazinyl-Reste und die entsprechenden durch Halogenaustausch mit tertiären Basen wie Trimethylamin, Triethylamin, Dimethyl-β-hydroxyethylamin, Triethanolamin, N,N-Dimethylhydrazin, Pyridin, α-, β- oder γ-Picolin, Nicotinsäure oder Isonicotinsäure, Sulfinaten insbesondere Benzolsulfinsäure oder Hydrogensulfit erhältlichen Reste.

Die Halogentriazinylreste können auch mit einem zweiten Halogentriazinylrest oder einem Halogendiazinylrest oder einem oder mehreren Vinylsulfonyl- oder Sulfatoethylsulfonylresten verknüpft sein bspw. über ein Brückenglied

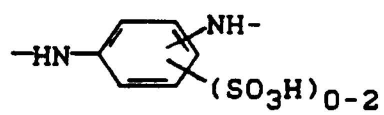
,
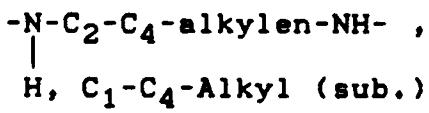
,

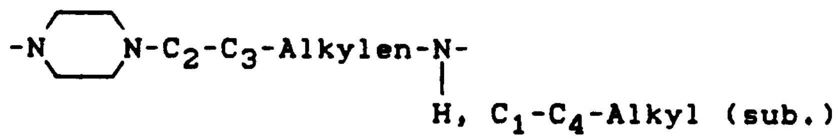

oder im Falle der Sulfatoethylsulfonyl- bzw. Vinylsulfonylgruppe über ein Brückenglied

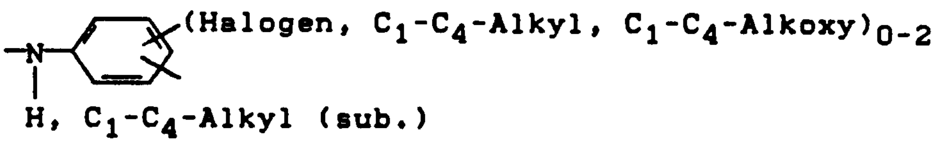
,

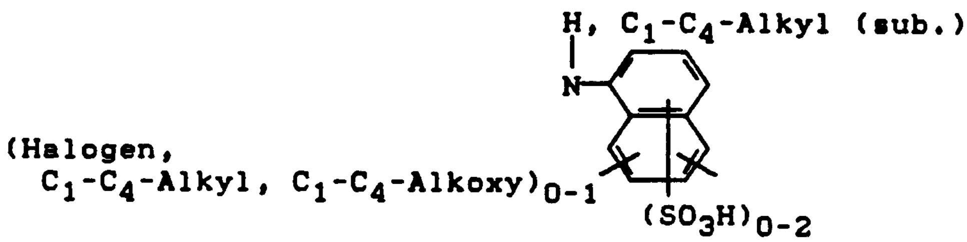

Mono-, Di- oder Trihalogenpyrimidinylreste, wie 2,4-Dichlorpyrimidinyl-6-, 2,4,5-Trichlorpyrimidinyl-6-, 2,4-Dichlor-5-nitro- oder -5-methyl- oder -5-carboxymethyl-oder -5-carboxy- oder -5-cyano- oder -5-vinyl- oder -5-sulfo- oder -5-mono-, -di- oder -trichlormethyl- oder -5-carbalkoxy-pyrimidinyl-6-, 2,6-Dichlorpyrimidin-4-carbonyl-, 2,4-Dichlorpyrimidin-5-carbonyl-, 2-Chlor-4-methyl-pyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl, 2,4,6-Trichlorpyrimidin--5-carbonyl-, 2,4-Dichlorpyrimidin-5-sulfonyl-, 2-Chlor-chinoxalin-3-carbonyl, 2- oder 3-Monochlorchinoxalin-6-carbonyl-, 2- oder 3-Monochlorchinoxalin-6-sulfonyl-, 2,3-Dichlorchinoxalin-5- oder -6-carbonyl-, 2,3-Dichlorchinoxalin-5- oder -6-sulfonyl-, 1,4-Dichlorphthalazin-6-sulfonyl-oder -6-carbonyl-, 2,4-Dichlorchinazolin-7- oder -6-sulfonyl- oder -carbonyl-, 2- oder 3- oder 4-(4′,5′-Dichlorpyridazon-6′-yl-1′)-phenylsulfonyl- oder -carbonyl-, β-(4′,5′-Dichlorpyridazon-6′-yl-1′)-ethylcarbonyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-sowie die, entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 5-Chlor-6-dichlormethyl-2-fluor-4-pyrimidinyl-, 5-Chlor-6-trichlormethyl-2-fluor-4-pyrimidinyl-, 5-Chlor-2-chlormethyl-6-fluor-4-pyrimidinyl-, 5-Chlor-2-dichlormethyl-6-fluor-4-pyrimidinyl-, 5-Chlor-2-trichlormethyl-6-fluor-4-pyrimidinyl-, 5-Chlor-2-fluordichlormethyl-6-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl-oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 5-Chlor-6-Fluor-2-Methyl-4-pyrimidinyl-, 5,6-Difluor-2-Trifluormethyl-4-pyrimidinyl-, 5-Chlor-6-Fluor-2-Dichlorfluormethyl-4-pyrimidinyl-, 2-Fluor-5-chlorpyrimidin-4-yl, 2-Methyl-4-fluor-5-methylsulfonylpyrimidinyl-6, 2,6-Difluor-5-methyl-sulfonyl-4-pyrimidinyl-, 2,6-Dichlor-5-methylsulfonyl-4-pyrimidinyl, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl; sulfonylgruppenhaltige Triazinreste, wie 2,4-Bis-(phenylsulfonyl)-triazinyl-6-, 2-(3'-Carboxyphenyl)-sulfonyl-4-chlortriazinyl-6-, 2-(3'-Sulfophenyl)-sulfonyl-4-chlortriazinyl-6-, 2,4-Bis-(3'-carboxyphenylsulfonyl)-triazinyl-6; sulfonylgruppenhaltige Pyrimidinringe, wie 2-Carboxymethylsulfonyl-pyrimidinyl-4-, 2-Methylsulfonyl-6-methyl-pyrimidinyl-4-, 2-Methylsulfonyl-6-ethyl-pyrimidinyl-4-, 2-Phenylsulfonyl-5-chlor-6-methyl-pyrimidinyl-4-, 2,6-Bis-methylsulfonyl-pyrimidinyl-4-, 2,6-Bis-methylsulfonyl-5-chlor-pyrimidinyl-4-, 2,4-Bis-methylsulfonyl-pyrimidin-5-sulfonyl-, 2-Methylsulfonyl-pyrimidinyl-4-, 2-Phenylsulfonyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlormethyl-pyrimidinyl-4-, 2-Methylsulfonyl-4-chlor-6-methylpyrimidin-5-sulfonyl-, 2-Methylsulfonyl-5-nitro-6-methylpyrimidinyl-4-, 2,5,6-Tris-methylsulfonyl-pyrimidinyl-4-, 2-Methylsulfonyl-5,6-dimethyl-pyrimidinyl-4-, 2-Ethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-methylsulfonyl-6-carboxypyrimidinyl-4-, 2-Methylsulfonyl-5-sulfo-pyrimidinyl-4-, 2-Methylsulfonyl-6-carbomethoxy-pyrimidinyl-4-, 2-methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-$\beta$-Sulfoethylsulfonyl-6-methyl-pyrimidinyl-4-, 2-Methylsulfonyl-5-brompyrimidinyl-4-, 2-Phenylsulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4-und -5-carbonyl-, 2,6-Bis-(methylsulfonyl)-pyrimidin-4-oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methylpyrimidin-5-sulfonyl- oder -carbonyl-; 2-Chlorbenzthiazol-5- oder -6-carbonyl- oder -5-oder -6-sulfonyl-, 2-Arylsulfonyl-oder Alkylsulfonylbenzthiazol-5- oder -6-carbonyl- oder -5- oder -6-sulfonyl-, wie 2-Methylsulfonyl- oder 2-Ethylsulfonylbenzthiazol-5- oder -6- sulfonyl- oder -carbonyl-, 2-Phenylsulfonylbenzthiazol-5- oder -6-sulfonyl oder -carbonyl-und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl-, 2-Chlorbenzimidazol-5- oder -6-carbonyl- oder -sulfonyl-, 2-Chlor-1-methylbenzimidazol-5-oder -6-carbonyl- oder -sulfonyl-, 2-Chlor-4-methylthiazol-(1,3)-5-carbonyl- oder -4- oder -5-sulfonyl-, N-Oxid des 4-Chlor-oder 4-Nitrochinolin-5-carbonyl.

Desweiteren sind Reaktivgruppen der aliphatischen Reihe zu nennen, wie Acryloyl- Mono-, Di- oder Trichloracryloyl, wie -CO-CH = CH-Cl, -CO-CCl = $CH_2$, -CO-CCl = CH-$CH_3$, ferner -CO-CCl = CH-COOH, -CO-CH = CCl-COOH, $\beta$-Chlorpropionyl-, 3-Phenylsulfonylpropionyl-, 3-Methylsulfonylpropionyl-, 2-Fluor-2-chlor-3,3-difluorcyclobutan-1-carbonyl-, 2,2,3,3-Tetrafluorcyclobutan-carbonyl-1-oder -sulfonyl-1-, $\beta$-(2,2,3,3-Tetrafluorcyclobutyl-1-)-acryloyl-,$\alpha$- oder $\beta$-Bromacryloyl-, $\alpha$- oder $\beta$-Alkyl-oder -Arylsulfonylacryloyl-Gruppe, wie $\alpha$- oder $\beta$-Methylsulfonylacryloyl, Chloracetyl, Vinylsulfonyl, -$SO_2CH_2CH_2Z$ worin Z = alkalisch abspaltbare Gruppe, insbesondere -$OSO_3H$, -$OCOCH_3$, Cl, Br, F, -$SSO_3H$, -$OPO_3H_2$, -$OCOC_6H_5$, Di-$C_1$-$C_4$-Alkylamino, quartäres Ammonium, insbesondere -$N^{\oplus}(C_1$-$C_4$-Alkyl$)_3X^{\ominus}$, -$OSO_2CH_3$, -SCN, -NH-$SO_2CH_3$, -$OSO_2$-$C_6H_4$-$CH_3$, -$OSO_2$-$C_6H_5$, -OCN,

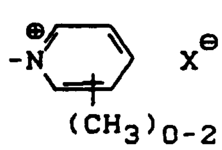 oder 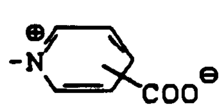 mit

X = Anion, bspw. -$OSO_3H$, -$SSO_3H$, $OPO_3H_2$, -Cl, -Br, -F, -SCN, -OCN, -$OSO_2CH_3$, -$OSO_2C_6H_5$,

$OCOCH_3$, -J, $-OSO_2OCH_3$, $-OSO_2C_6H_4CH_3$, $-OCOC_6H_5$,

In Formel (2) haben folgende Gruppierungen eine bevorzugte Bedeutung:

$T_1$ und $T_2$ = Cl
X und $X_1$ = NH
R = H
$R_1$ = $SO_3H$
$R_2$ und $R_3$ = H
B = $CH_2$-$CH_2$-$OSO_3H$
W = $C_2$-$C_4$-Alkyl, das durch $OSO_3H$ substituiert ist
Z = Rest einer Reaktivkomponente der Monofluor- oder Monochlortriazinreihe oder 2,4-Difluor-5-chlorpyrimidinyl-6-
Y = $C_2$-$C_4$-Alkylen

Im Rahmen der Formel (2) sind folgende Farbstoffe bevorzugt:

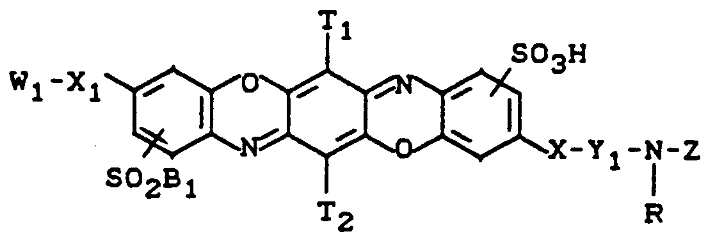

(3)

worin
$T_1$, $T_2$, R, X und Z die angegebene Bedeutung haben und
$B_1$ = $CH_2$-$CH_2OSO_3H$
$Y_1$ = aliphatischer oder araliphatischer Rest
$W_1$ = aliphatischer oder araliphatischer Rest

Weiterhin bevorzugt sind Farbstoffe der Formel

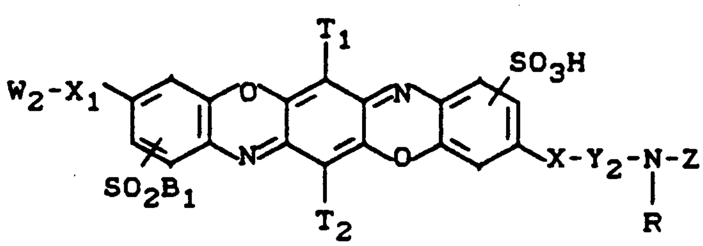

(4)

worin
$T_1$, $T_2$, R, X, Z und $B_1$ die angegebene Bedeutung haben und
$Y_2$ = aliphatischer Rest
$W_2$ = aliphatischer Rest

Besonders bevorzugt sind Farbstoffe der Formel (4), in denen

$Y_2$ = $-CH_2-CH_2-$, $-CH_2-CH_2-CH_2-CH_2-$, $-CH_2-CH_2-CH_2-$,
$-CH_2-CH-$
|
$CH_3$

$W_2$ = $-CH_2-CH_2-OSO_3H$, $-CH_2-CH-CH_3$
|
$OSO_3H$

Weiterhin bevorzugt sind Farbstoffe der Formeln (3) und (4), in denen
$T_1$ und $T_2$ = Cl
X und $X_1$ = NH
R = H

Z = 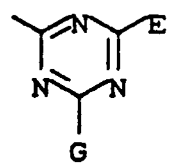

worin
G = F oder Cl und
E im Falle G = F eine gegebenenfalls substituierte Aminogruppe bedeutet und
im Falle G = Cl eine Ether- oder Thioethergruppe der Formeln
$-OR_5$ oder $-SR_5$
wobei

$R_5$ = gegebenenfalls substituiertes $C_1$-$C_6$-Alkyl oder gegebenenfalls substituiertes Aryl,

oder eine gegebenenfalls substituierte Aminogruppe.

Bevorzugte gegebenenfalls substituierte Aminogruppen sind dabei solche der Formel

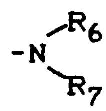

wobei

$R_6$ = Wasserstoff oder gegebenenfalls substituiertes $C_1$-$C_6$-Alkyl

$R_7$ = Wasserstoff oder gegebenenfalls substituiertes $C_1$-$C_6$-Alkyl, $C_5$-$C_8$-Cycloalkyl oder gegebenenfalls substituiertes Aryl oder $R_6$ und $R_7$ bilden gegebenenfalls unter Einschluß eines weiteren Heteroatomes einen heterocyclischen Ring.

Substituenten der Alkylreste $R_5$, $R_6$ und $R_7$ sind beispielsweise OH, $OCH_3$, Cl, Cn, $OSO_3H$, COOH, $SO_3H$,

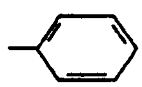 oder 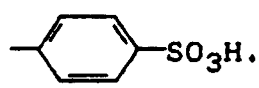

Arylreste $R_5$ und $R_7$ sind insbesondere Phenyl- oder Naphthylreste, die substituiert sein können, beispielsweise durch $C_1$-$C_4$-Alkyl, $C_1$-$C_4$-Alkoxy, Halogen wie F, Cl oder Br, $SO_3H$, COOH, $NHCOCH_3$, $NH_2$.

Beispiele für heterocyclische Gruppen, die durch

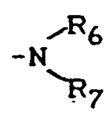

wiedergegeben werden, sind

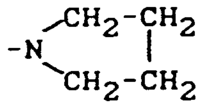 , 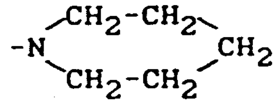 , 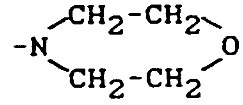 ,

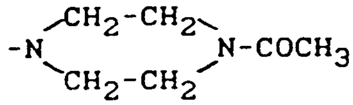 .

Die erfindungsgemäßen Farbstoffe der Formel lassen sich derzeit auf chemischem Weg nicht rein darstellen, sondern sie sind mit den symmetrischen Verbindungen der allgemeinen Formel (1a) und (1b)

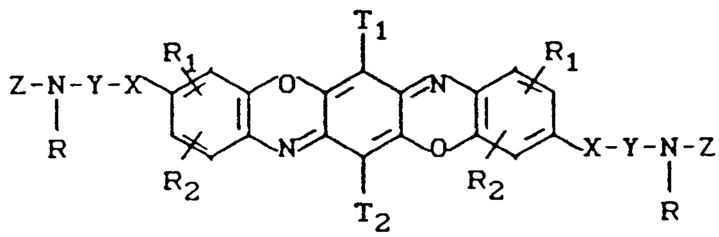 (1a)

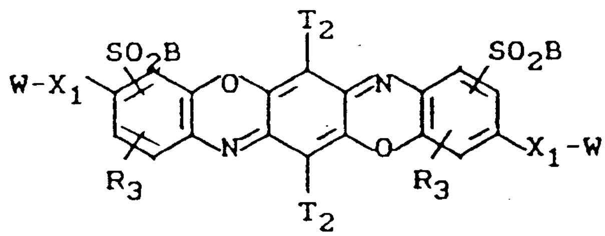 (1b)

in welchen die einzelnen Formelglieder die für Formel (2) angegebenen Bedeutungen haben, vergesellschaftet. Die erfindungsgemäßen Farbstoffe entstehen bei der Synthese als Gemisch mit diesen symmetrischen Farbstoffen der Formel (1a und 1b). Diese Verbindungen der Formeln (1a und 1b) stören jedoch nicht die gute Verwendbarkeit der erfindungsgemäßen Farbstoffe, da sie sich gleichfalls als faserreaktive Farbstoffe auf der Faser fixieren lassen.

Die vorliegende Erfindung betrifft somit auch Gemische bestehend aus den Farbstoffen der Formeln (2), (1a) und (1b), beispielsweise im Molprozentverhältnis von (30 bis 70) : (35 bis 15) : (35 bis 15), bevorzugt im Molverhältnis (40 bis 60) : (30 bis 20) : (30 bis 20).

Die vorliegende Erfindung betrifft weiterhin Verfahren zur Herstellung der Farbstoffe der Formel (2). Diese sind dadurch gekennzeichnet, daß man eine Aminoverbindung der Formel (5) und eine Aminoverbindung der Formel (6)

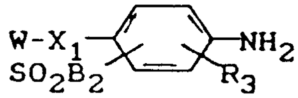 (5)

worin
W, $X_1$, $R_3$ die bei Formel (1) angegebene Bedeutung haben und $B_2$ für B oder für $\beta$-Hydroxyethyl steht,

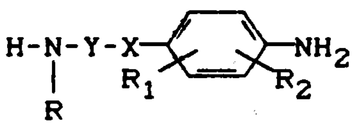

(6)

worin

R, $R_1$, $R_2$, X und Y die angegebene Bedeutung haben,

wobei substituierte Alkylgruppen in diesen Resten bevorzugt hydroxysubstituierte Alkylgruppen sind und wobei die Benzolkerne (5) und (6) in einer der o-Stellungen zur primären Aminogruppe zwingend nicht substituiert sein dürfen, in an und für sich üblicher und zur Synthese von Triphendioxazin-Verbindungen bekannten Weise mit einer Benzochinon-Verbindung der Formel (7)

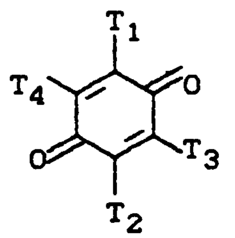

(7)

in welcher

$T_1$ und $T_2$ die obengenannten Bedeutungen haben und

$T_3$ und $T_4$ zueinander gleich oder voneinander verschieden sind und jedes für ein Wasserstoffatom, eine Alkoxygruppe von 1 bis 4 C-Atomen, wie insbesondere die Methoxygruppe oder für eine Phenoxygruppe steht oder bevorzugt ein Halogenatom wie Bromatom und insbesondere Chloratom ist, wobei $T_3$ und $T_4$ auch gleiche Bedeutung wie $T_1$ und $T_2$ haben können,

zunächst zu einem Zwischenprodukt der angenommenen allgemeinen Formel (8)

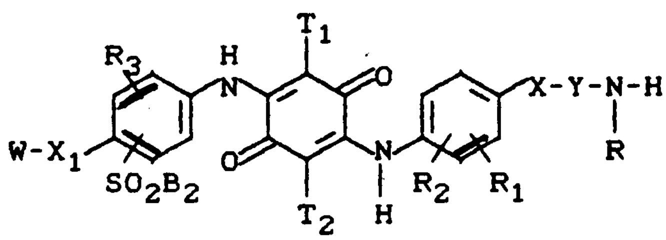

(8)

worin

$B_2$, R, $R_1$, $R_2$, $R_3$, X, $X_1$, $T_1$, $T_2$, W und Y die oben angegebene Bedeutung haben, umsetzt, und dieses nach Zwischenisolierung, vorzugsweise in Gegenwart eines Oxidationsmittels, zum Triphendioxazin cyclisiert, wobei man mit der cyclisierung gegebenenfalls vorhandene Hydroxyalkylgruppen, wie beispielsweise die $\beta$-Hydroxyethylgruppe des Restes $B_2$ mittels eines Sulfatierungsmittels, wie Schwefeltrioxid enthaltender Schwefelsäure in die entsprechende $\beta$-Sulfatoalkylgruppen überführt. Bei dieser Umsetzung treten natürlich auch die beiden symmetrischen Chromophore auf. Bevorzugt werden die beiden Aminoverbindungen (5) und (6) und das Chinon (7) in etwa äquimolaren Mengen eingesetzt, wobei die Angabe "etwa" bedeutet, daß der jeweilige molare Anteil zu 10 % differieren kann. Bevorzugt wird als Chinon der Formel (7) das 2,3,5,6-Tetrachlor-1,4-benzochinon (Chloranil) eingesetzt.

Die erfindungsgemäße Umsetzung zweier verschiedener Aminoverbindungen der allgemeinen Formel (5) und (6) mit einer Verbindung der allgemeinen Formel (7) zum Anil entsprechend der allgemeinen Formel (8) kann in wäßrigem, wäßrig-organischem oder in rein organischem Medium erfolgen, wobei die organischen Lösemittel vorzugsweise polare aprotische und protische Lösungsmittel darstellen, wie beispielsweise niedere Alkanole, wie Methanol und Ethanol oder halogenierte Benzole, wie o-Dichlorbenzol. Die erfindungsgemäße Umsetzung der Amine (5) und (6) mit den Chinonen (7) kann bei einer Temperatur zwischen 20 und 100 °C, vorzugsweise zwischen 50 und 70 °C, in Gegenwart eines säurebindenden Mittels, beispielsweise eines Alkali- oder Erdalkalicarbonats oder -acetats wie Natriumacetat, Natrium-carbonat oder Natrium-bicarbonat, oder eines Alkali- oder Erdalkalihydroxids, wie Natriumhydroxid oder eines Oxids eines Erdalkalimetalls, wie Magnesiumoxid, durchgeführt werden. Sofern in einem wäßrigen oder wäßrig-organischen Medium gearbeitet wird, wird ein pH-Bereich zwischen 4 und 7, vorzugsweise zwischen 5,5 und 6,5 eingestellt. Das Anil der Formel (8) wird sodann, vorzugsweise unter oxidierenden Bedingungen und vorzugsweise nach vorheriger Isolierung, in an und für sich üblicher und bekannter Verfahrensweise zur Triphendioxazin-Verbindung cyclisiert. Diese Umsetzung kann beispielsweise in Schwefelsäure oder Schwefeltrioxid enthaltender Schwefelsäure als Medium erfolgen, wobei als Oxidationsmittel Schwefeltrioxid, Ammonium- oder Alkalipersulfate, Natriumperborat, vorzugsweise jedoch Natrium- oder Kaliumperoxidsulfat (entsprechend den Formeln $Na_2S_2O_8$ bzw. $K_2S_2O_8$), verwendet werden, oder auch mit Oleum in Gegenwart von Iod oder einer anorganischen Iodverbindung analog den Angaben der europäischen Patentanmeldungs-Veröffentlichung Nr. 01 41 359 A.

Vorzugsweise führt man die Umsetzung in konzentrierter Schwefelsäure, wie 96- bis bevorzugt 100 %iger Schwefelsäure und insbesondere in Schwefeltrioxid enthaltender Schwefelsäure (Oleum), wie bis zu 30 gew.-%igem Oleum, durch. Die Reaktionstemperatur wird zwischen 5 und 40 °C, gegebenenfalls auch bis zu 80 °C, bevorzugt jedoch zwischen 15 und 25 °C, gewählt.

Sofern der Ringschluß in Schwefelsäure oder Oleum als Reaktionsmedium ausgeführt wird, können Hydroxy-Gruppen, die an einem Alkylrest des Moleküls gebunden sind, wie beispielsweise die oben bereits erwähnten $\beta$-Hydroxyethyl-Gruppen des Formelrestes $B_2$ oder Hydroxyalkyl-Gruppen der Formelreste $R_4$, W, Y und R in die entsprechenden Sulfatoalkylgruppen übergeführt werden. Bei Verwendung von Oleum soll die Reaktionstemperatur 30 °C nicht überschreiten.

Bei Temperaturen oberhalb von 25 °C lassen sich erfindungsgemäß auch Sulfogruppen in die aromatischen Ringe des Triphendioxazins (die entsprechenden Arylreste von $T_1$, $T_2$, W, Y, $R_3$ und $R_4$ eingeschlossen) einführen. Das als Reaktionsmedium und Agenz verwendete Oleum besitzt in der Regel einen Gehalt von 5 bis 30 Gew.-%, bevorzugt 10 bis 20 Gew.-% an Schwefeltrioxid. Bekannte Verfahrensweisen zur Umsetzung von aromatischen Aminen mit 1,4-Benzochinonen, die zu Triphendioxazinverbindungen führen, sind beispielsweise in K. Venkataraman, "The Chemistry of Synthetic Dyes", Band V, Seite 419 bis 427 (1971), und in Ullmanns Encyclopädie der technischen Chemie, 4. Auflage, Band 8, Seite 240 und 241 (1974) sowie der deutschen Offenlegungsschrift Nr. 28 23 828 beschrieben.

Die Ausgangsverbindungen entsprechend der Formel (5) sind beispielsweise aus den deutschen Offenlegungsschriften 3 344 253, 3 404 855 und 3 439 756 und den europäischen Offenlegungsschriften 141 996 und 153 599 bekannt. Bevorzugt werden Verbindungen der Formel (5) eingesetzt, in denen $B_2$ für $\beta$-Hydroxyethyl steht.

Die Ausgangsverbindungen entsprechend der Formel (6) sind beispielsweise aus den deutschen Offenlegungsschriften 2 302 382 und 2 503 611 bekannt.

Zur Herstellung von Farbstoffen der Formel (1) werden die bei der Cyclisierung anfallenden Triphendioxazinfarbstoffe der Formel (9)

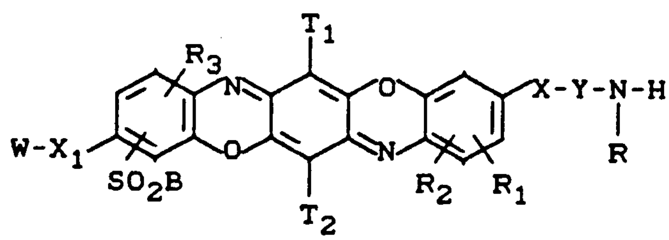

(9)

worin
R, $R_1$, $R_2$, $R_3$, X, $X_1$, $T_1$, $T_2$, W und Y die angegebene Bedeutung haben,
mit einer Reaktivkomponente der Formel (10)

A - Z (10)

worin
Z die angegebene Bedeutung hat und A einen als Anion abspaltbaren Substituenten (vorzugsweise Halogen) darstellt, unter Abspaltung von H-A kondensiert. Diese Acylierung wird im allgemeinen in Wasser bei Temperaturen von 0° bis 80 °C - je nach Reaktivität von (10) - und im schwach alkalischen, neutralen

oder schwach saurem Medium durchgeführt. Vorzugsweise wird während der Kondensation ein säurebindendes Mittel zugesetzt, wie beispielsweise LiOH, $Li_2CO_3$, $Na_2CO_3$, NaOH, $K_2CO_3$, KOH, $MgCO_3$, $CaCO_3$ u.ä.

Beispiele für Verbindungen der Formel (5), (6), (7) und (10) sind folgende

Formel (5)

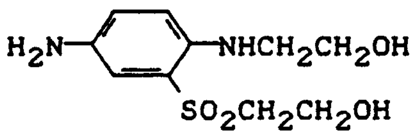

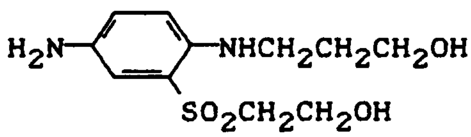

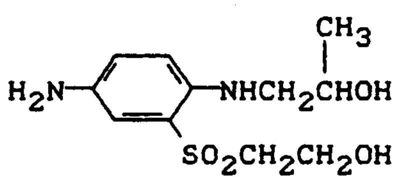

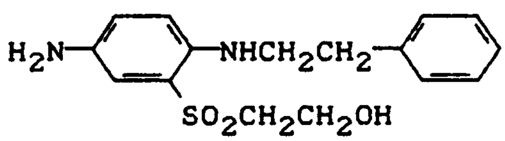

(Sulfatierung des Phenylrestes beim Ringschluß in Oleum)

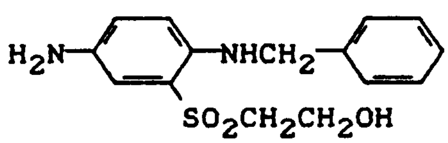

(Sulfatierung des Phenylrestes beim Ringschluß in Oleum)

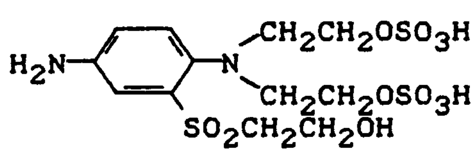

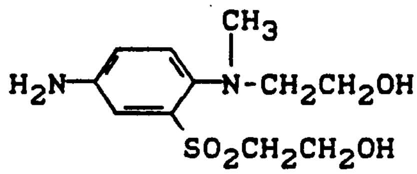

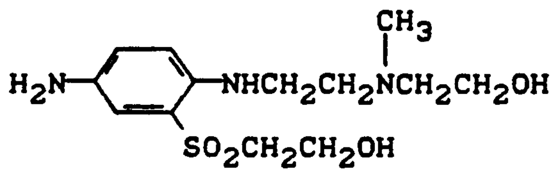

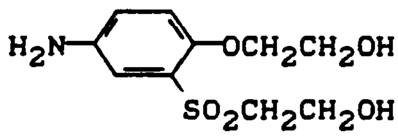

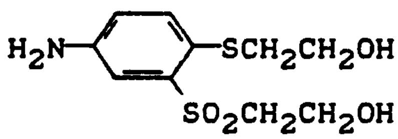

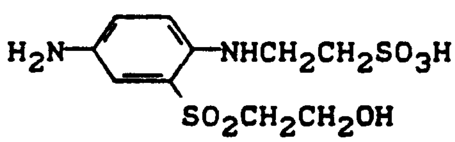

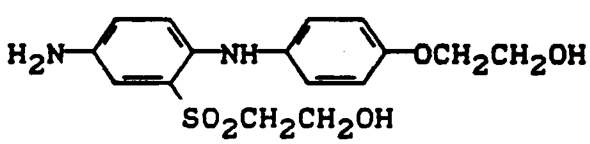

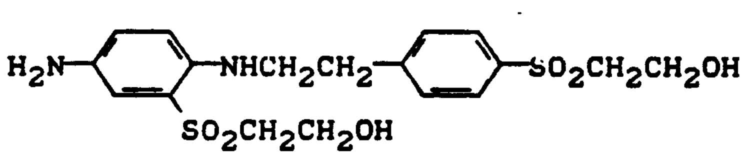

Formel (6)

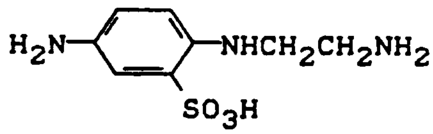

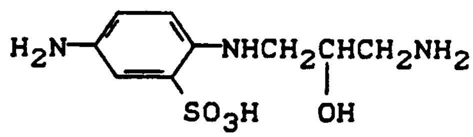

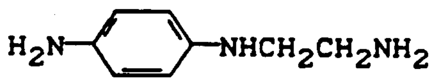

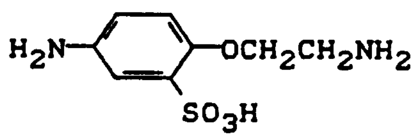

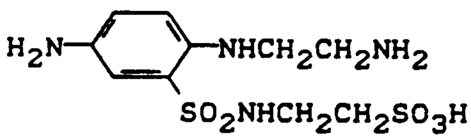

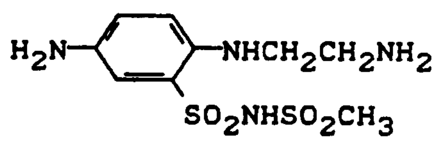

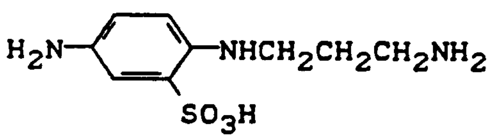

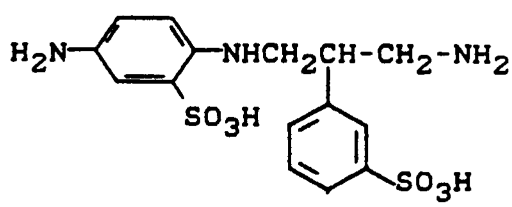

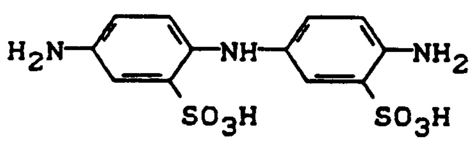

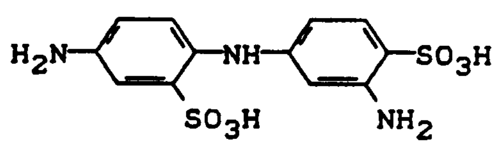

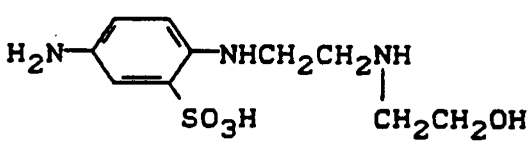

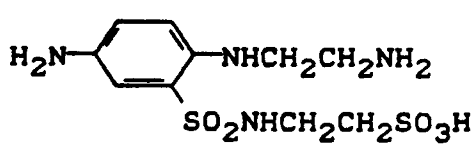

Formel (7)

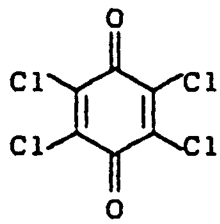
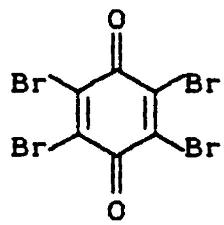
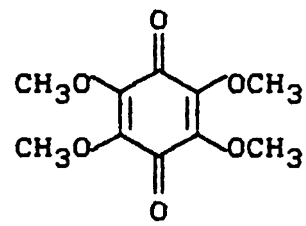
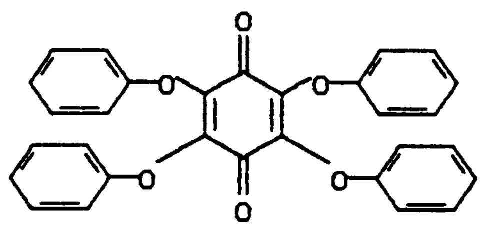
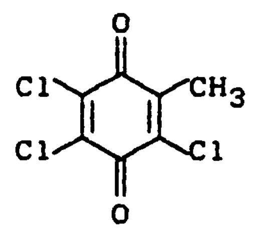
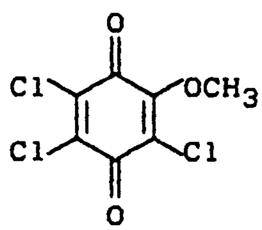

Formel (10)

Als Reaktivkomponenten (10) sind die Halogenide, insbesondere die Chloride oder Fluoride der vorstehend aufgeführten Reaktivgruppen Z zu verstehen.

Die neuen Farbstoffe geben auf Cellulose- sowie natürlichen synthetischen Polyamidmaterialien klare Färbungen. Sie zeichnen sich durch hohe Farbstärke aus.

Als wasserlösliche Reaktivfarbstoffe finden die neuen Farbstoffe bevorzugtes Interesse für das Färben von hydroxyl- und amidgruppenhaltigen Textilmaterialien, insbesondere von Materialien aus nativer und regenerierter Cellulose sowie synthetischen Polyamid- und Polyurethanfasern, Wolle und Seide.

Die genannten Materialien werden nach den für wasserlösliche Reaktivfarbstoffe allgemein bekannten und in der Technik üblichen Verfahren gefärbt oder bedruckt. Man erhält dann licht- und naßechte brillante Färbungen und Drucke.

Bei den Temperaturangaben in den Beispielen handelt es sich um °C. Die Formeln der wasserlöslichen Reaktivfarbstoffe in der Beschreibung und in den Beispielen sind die der freien Säuren. Isoliert und angewandt werden die Farbstoffe im allgemeinen in Form ihrer Alkalisalze, insbesondere der Lithium-, Natrium- oder Kaliumsalze.

Die in den Beispielen angegebenen Farbkennzahlen beziehen sich auf Colour Index Hue Indication Chart (Indicator Numbers).

Die in den folgenden Beispielen angegebenen Formeln beziehen sich auf jeweils eines der bei der Umsetzung entstehenden isomeren Reaktionsprodukte, wobei bezüglich der Substituenten in den beiden äußeren aromatischen Ringen des Triphendioxazin-Systems der isomeren Reaktionsprodukte auf das unter Formel (1) gesagte verwiesen wird.

Beispiel 1

a) Herstellung der Anilverbindung

23,1 g 3-Sulfo-4-(β-aminoethylamino)-anilin und 26 g 3-(β-Hydroxyethylsulfonyl)-4-(β-hydroxyethylamino)-anilin werden in 500 ml Wasser bei 60 °C und einem pH von 5,5 verrührt. Anschließend gibt man 26 g Chloranil bei einer Reaktionstemperatur von etwa 65 °C und unter Einhaltung eines pH von 5,0 bis 5,5 zu, den man durch Zutropfen einer verdünnten Sodalösung einhält. Man bringt die Reaktion bei gleicher Temperatur und dem angegebenen pH durch vierstündiges Rühren zu Ende.

Das ausgefallene Reaktionsprodukte wird bei 60 °C abgesaugt, mit Wasser gewaschen und getrocknet. Man erhält nach dem Mahlen ein braunes Pulver, das aus dem Gemisch folgender drei Verbindungen besteht, wobei die assymmetrische Verbindung der Formel (A) überwiegt.

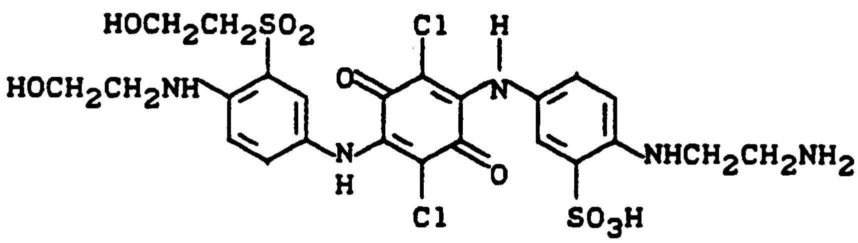

(A)

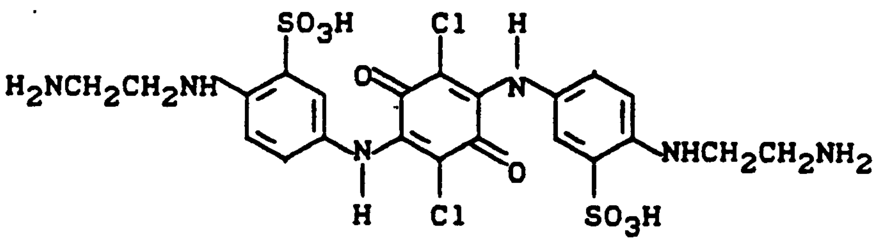

(B)

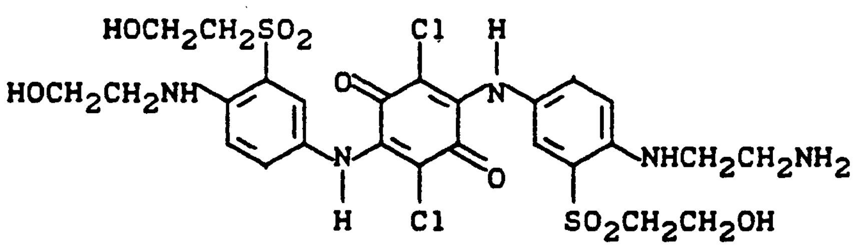

(C)

b) Cyclisierung zum Triphendioxazin

33,2 g des nach a) erhaltenen Produktes werden bei einer Temperatur zwischen 20 und 25 °C in 250 g 10%iges Oleum eingetragen. Der Ansatz wird bei dieser Temperatur noch eine Stunde gerührt. Dann werden 26 g Natriumperoxodisulfat so eingetragen, daß die Temperatur zwischen 20 und 25 °C gehalten werden kann. Man rührt 5 Stunden nach und läßt dann des Ansatz auf Eis laufen. Das Kondensationsprodukt ist zum Teil ausgefallen. Durch Zusatz von 10 Volumenprozent Kaliumchlorid wird der Niederschlag vervollständigt. Das Produkt wird nach dem Absaugen und Waschen mit KCl-Lösung in 1 l Eiswasser angerührt und durch Einstreuen von Natriumbicarbonat auf pH 5-5,5 gestellt.

c) Acylierung mit der Reaktivkomponente

0,05 Mol o-Sulfanilsäure werden mit LiOH-Lösung in 200 ml Eiswasser neutral gelöst. Bei 0 °C tropft man 0,05 Mol Trifluortriazin ein und hält dabei den pH durch Zugabe von LiOH-Lösung zwischen 6 und 7.

Die resultierende Lösung, die das Kondensationsprodukt der Formel

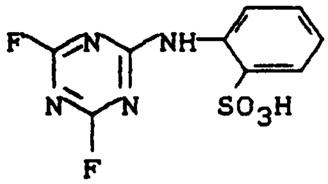

enthält, wird zu der nach b) erhaltenen Anschlämmung des Cyclisierungsproduktes gegeben. Die Acylierung wird bei pH 8 und 0 ° C durchgeführt, wobei der pH durch Eintropfen von LiOH-Lösung bei 8 gehalten wird. Der Farbstoff geht während der Acylierung in Lösung. Nach beendeter Kondensation wird die Lösung geklärt und der Farbstoff durch Einstreuen von 20 Volumenprozent NaCl ausgesalzen. Nach dem Absaugen, Trocknen und Mahlen erhält man ein blaues Farbstoffpulver, das Baumwolle nach einem der für Reaktivfarbstoffe üblichen Färbeverfahren aus langer Flotte in einem brillanten kräftigen Blauton färbt (Farbkennzahl 13).

Der in dem Gemisch erhaltene erfindungsgemäße Farbstoff entspricht der wahrscheinlichen Formel

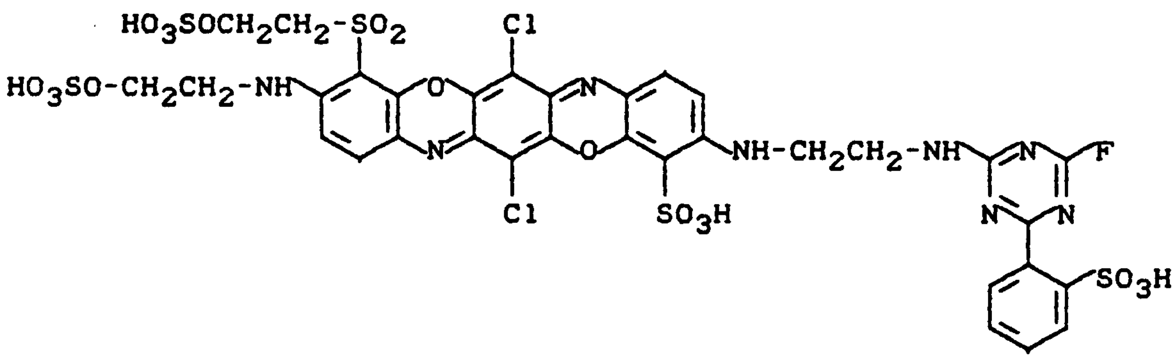

Ähnliche Farbstoffe, die Baumwolle in einem brillanten Blau mit der Farbkennzahl 13 färben, werden erhalten, wenn zur Acylierung der aliphatischen Aminogruppe des Chromophores in Beispiel 1 entsprechende Mengen der folgenden Acylierungsmittel verwendet werden.

Beispiel

2

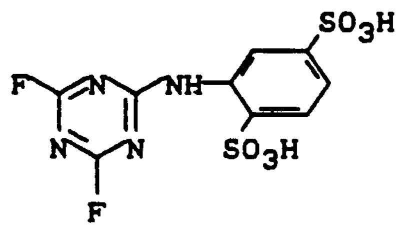

3

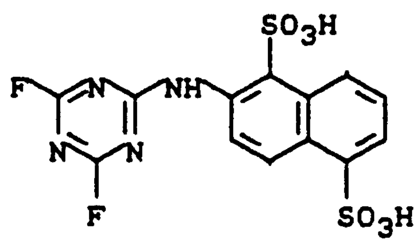

4

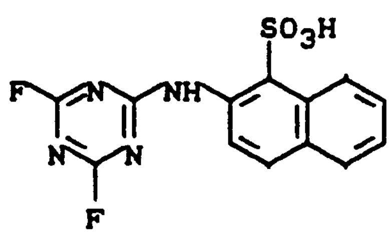

5

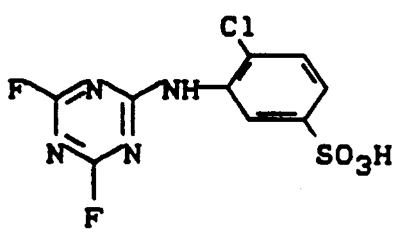

**Beispiel**

6

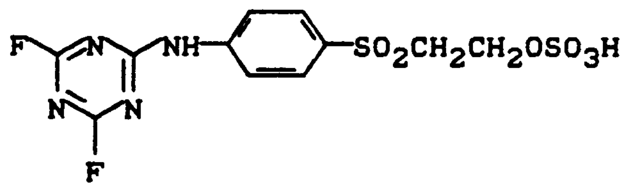

7

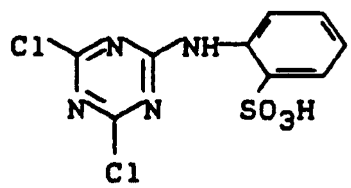

8

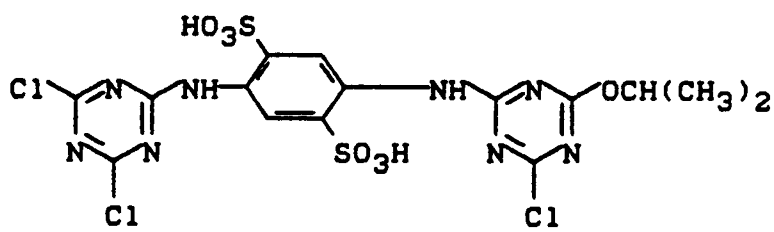

9

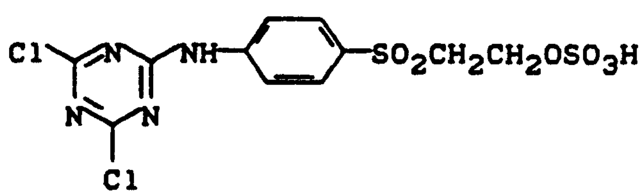

(die Acylierung in den Beispielen 7, 8 und 9 wird bei 25 bis 30° C und pH 7 bis 7,5 ausgeführt)

10

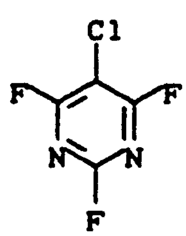

**Beispiel**

**11** 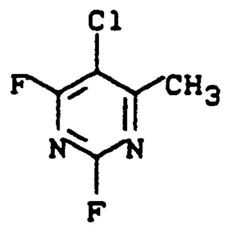

**12** 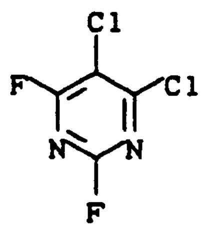

**(die Acylierung in den Beispielen 10, 11 und 12 wird bei 0 bis $5^0$C und pH 7 bis 8 ausgeführt).**

Weitere wertvolle Farbstoffe werden erhalten, wenn man anstelle des in Beispiel 1 verwendeten erfindungsgemäßen Chromophors die nachfolgend aufgeführten einsetzt, wobei als Acylierungsmittel die in den Beispielen 1 bis 12 verwendeten Reaktivkomponenten eingesetzt werden.

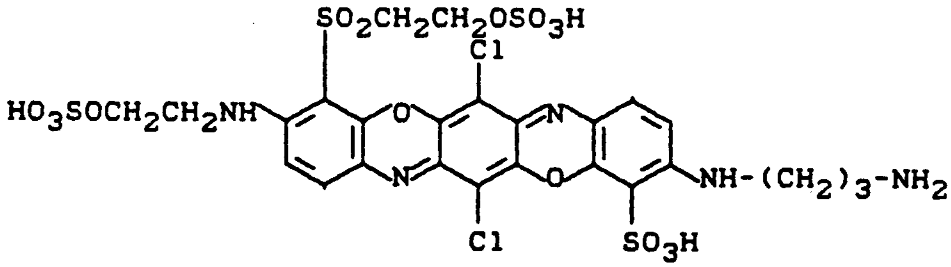

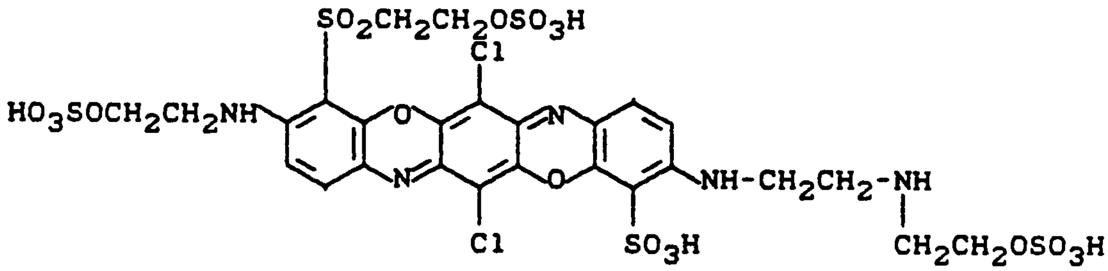

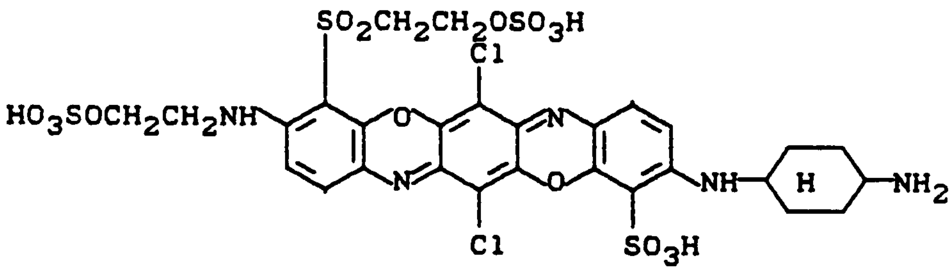

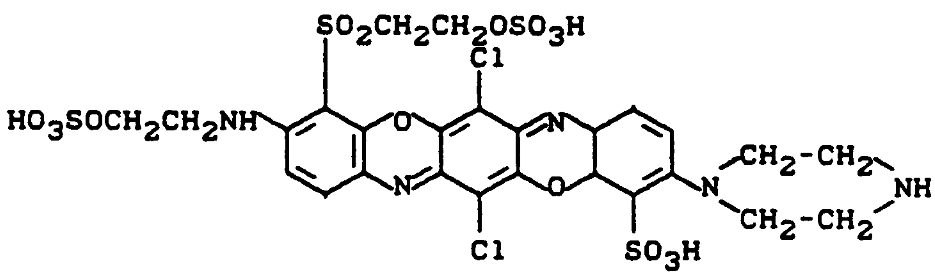

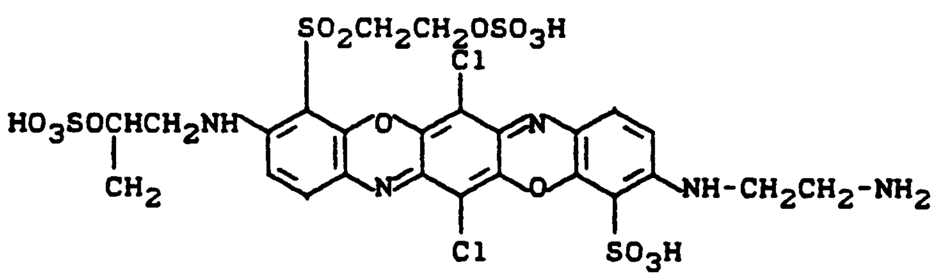

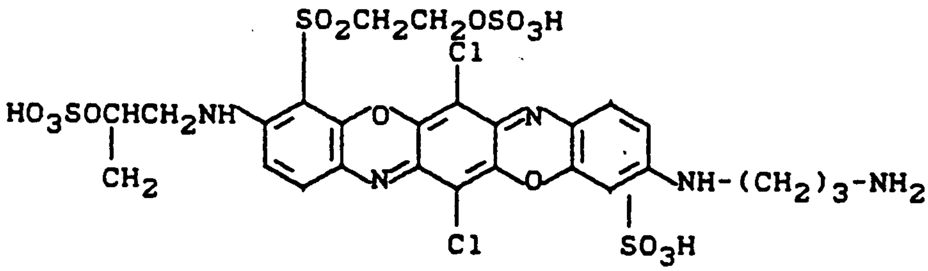

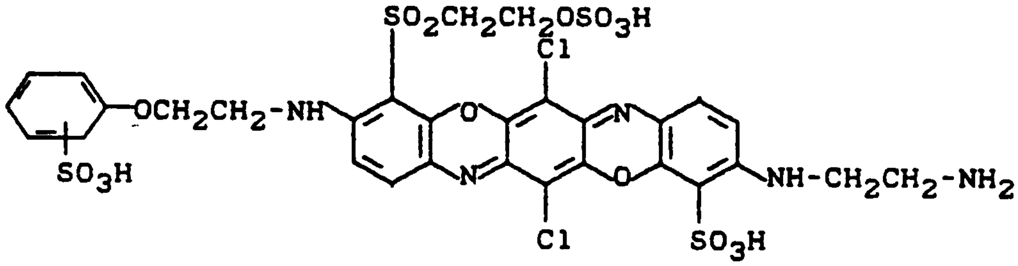

## Patentansprüche

1. Triphendioxazin-Farbstoffe der Formel

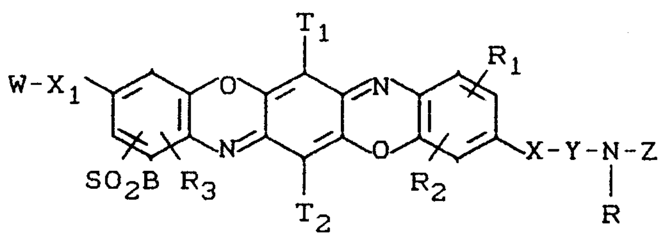

(2)

worin

| | |
|---|---|
| B = | $CH=CH_2$ oder $CH_2CH_2V$, worin |
| V = | abspaltbare Gruppe wie $OSO_3H$; Cl, $S_2O_3H$, $OCOCH_3$, $OPO_3H_2$; $-{}^{\oplus}N(CH_3)_3$ |
| R = | H oder gegebenenfalls substituiertes $C_1$-$C_4$-Alkyl, |
| Z = | faserreaktiver Rest. |
| $T_1$ und $T_2$ | für H, Cl, Br, $C_1$-$C_4$-Alkoxy, $C_1$-$C_4$-Alkyl, gegebenenfalls substituiertes Phenyl oder Phenoxy stehen, wobei $T_1$ und $T_2$ bevorzugt gleiche Bedeutung haben, |
| X und $X_1$ | für O, S oder 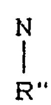 steht, |
| R" | für Wasserstoff, oder gegebenenfalls substituiertes $C_1$-$C_4$-Alkyl steht und für den Fall, daß Y einen gegebenenfalls substituierten Zweiwertigen aliphatischen Rest bedeutet, zusammen mit R auch für Alkylen, vorzugsweise $-CH_2CH_2-$steht, und für den Fall, daß W einen aliphatischen Rest bedeutet zusammen mit W gegebenenfalls unter Einschluß eines Heteroatoms einen Ring bilden kann, |
| Y | für einen gegebenenfalls weitersubstituierten zweiwertigen aliphatischen, araliphatischen, cycloaliphatischen oder aromatischen Rest steht, |

W für H oder einen gegebenenfalls weitersubstituierten aliphatischen, araliphatischen, cycloaliphatischen oder aromatischen Rest steht,

$R_1$ eine wasserlöslichmachende Gruppe wie eine Carboxy- oder Sulfogruppe oder eine Sulfamoylgruppe ist, die mono- oder disubstituiert sein kann, wobei die Substituenten vorzugsweise Alkylgruppen von 1 bis 4 C-Atomen, die durch einen Phenylrest substituiert sein können, und Phenylreste sind, wobei diese Reste wiederum bevorzugt wasserlöslichmachende Gruppen enthalten können, oder eine Disulfimidgruppe $SO_2NHSO_2R_4$ ist, wobei $R_4$ für einen gegebenenfalls substituierten $C_1$-$C_4$-Alkylrest oder Phenylrest steht, oder eine Sulfongruppe -$SO_2R_4$ ist

$R_2$ und $R_3$ für H, $C_1$-$C_4$-Alkyl, $C_1$-$C_4$-Alkoxy, Carboxy, F, Cl oder Br stehen und wobei die Reste $SO_2B$ bzw. $R_1$ jeweils in o-Stellung zum Substituenten $X_1$-W bzw.

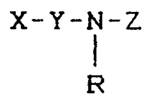

stehen.

**2.** Farbstoffe des Anspruch 1 mit
$T_1$ und $T_2$ = Cl
X und $X_1$ = NH
R = H
$R_1$ = $SO_3H$
$R_2$ und $R_3$ = H
B = $CH_2$-$CH_2$-$OSO_3H$
W = $C_2$-$C_4$-Alkyl, das durch $OSO_3H$ substituiert ist
Z = Rest einer Reaktivkomponente der Monofluor- oder Monochlortriazinreihe oder 2,4-Difluor-5-chlorpyrimidinyl-6-
Y = $C_2$-$C_4$-Alkylen.

**3.** Farbstoffe des Anspruchs 1 mit der Formel

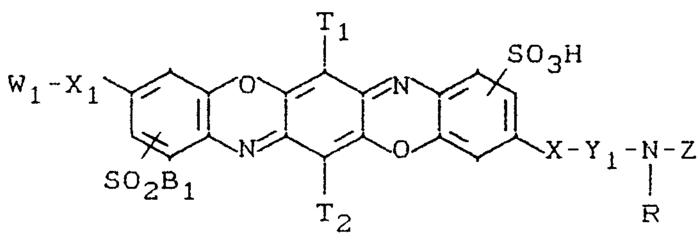

(3)

worin
$T_1$, $T_2$, R, X und Z die in Anspruch 1 angegebene Bedeutung haben und
$B_1$ = $CH_2$-$CH_2OSO_3H$
$Y_1$ = aliphatischer oder araliphatischer Rest
$W_1$ = aliphatischer oder araliphatischer Rest.

4. Farbstoffe des Anspruchs 1 der Formel

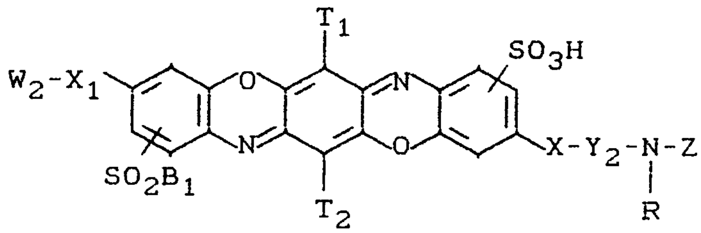

(4)

worin
$T_1$, $T_2$, R, X, Z und $B_1$ die angegebene Bedeutung haben und
$Y_2$ = aliphatischer Rest
$W_2$ = aliphatischer Rest.

5. Farbstoffe des Anspruchs 4 mit

$Y_2 = -CH_2-CH_2-$, $-CH_2-CH_2-CH_2-CH_2-$, $-CH_2-CH_2-CH_2-$, $-CH_2-CH(CH_3)-$

$W_2 = -CH_2-CH_2-OSO_3H$, $-CH_2-CH(OSO_3H)-CH_3$ .

6. Farbstoffe des Anspruchs 4 mit
$T_1$ und $T_2$ = Cl
X und $X_1$ = NH
R = H

Z = 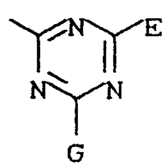

worin
G = F oder Cl und
E im Falle G = F eine gegebenenfalls substituierte Aminogruppe bedeutet und
im Falle G = Cl eine Ether- oder Thioethergruppe der Formeln
$-OR_5$ oder $-SR_5$
wobei
$R_5$ = gegebenenfalls substituiertes $C_1$-$C_6$-Alkyl oder gegebenenfalls substituiertes Aryl,
oder eine
gegebenenfalls substituierte Aminogruppe.

7. Farbstoffe des Anspruchs 6 mit

E = 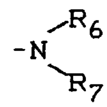

wobei

$R_6$ = Wasserstoff oder gegebenenfalls substituiertes $C_1$-$C_6$-Alkyl

$R_7$ = Wasserstoff oder gegebenenfalls substituiertes $C_1$-$C_6$-Alkyl, $C_5$-$C_8$-Cycloalkyl oder gegebenenfalls substituiertes Aryl oder $R_6$ und $R_7$ bilden gegebenenfalls unter Einschluß eines weiteren Heteroatomes einen heterocyclischen Ring.

8. Gemische aus Farbstoffen der Formel

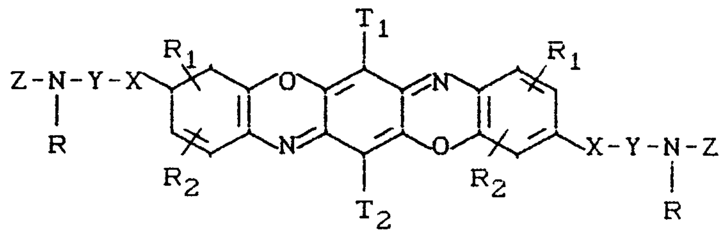

(1a)

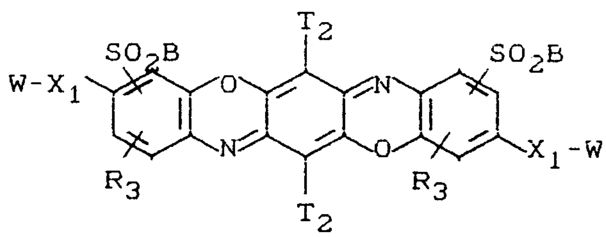

(1b)

mit Farbstoffen des Anspruchs 1 der Formel (2), wobei $T_1$, $T_2$, $R_1$, $R_2$, X, Y, R, Z, $X_1$, W, $R_3$ und B die in Anspruch 1 angegebene Bedeutung haben.

9. Gemische der Farbstoffe (1a), (1b) und (2) gemäß Anspruch 8 im Molprozentverhältnis 30-70:35-15:35-15, insbesondere 40-60:30-20:30-20.

10. Verwendung der Farbstoffe der Ansprüche 1-9 zum Färben und Bedrucken von hydroxylgruppen- und amidgruppenhaltigen Materialien.

11. Mit den Farbstoffen der Ansprüche 1-9 gefärbte oder bedruckte hydroxylgruppenhaltige oder amidgruppenhaltige Materialien.

## Claims

1. Triphendioxazine dyestuffs of the formula

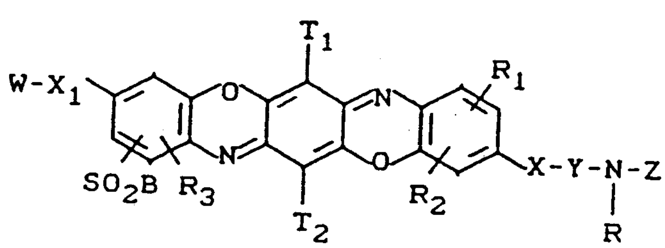

(2)

in which

B is $CH=CH_2$ or $CH_2CH_2V$,
in which

V is a detachable group such as $OSO_3H$, Cl, $S_2O_3H$, $OCOCH_3$, $OPO_3H_2$, $-^{\oplus}N(CH_3)_3$

R is H or substituted or unsubstituted $C_1$-$C_4$-alkyl,

Z is a fibre-reactive radical,

$T_1$ and $T_2$ represent H, Cl, Br, $C_1$-$C_4$-alkoxy, $C_1$-$C_4$-alkyl, substituted or unsubstituted phenyl or phenoxy, in which $T_1$ and $T_2$ preferably have the same meaning,

X and $X_1$ represent O, S or

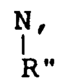

R" represents hydrogen or substituted or unsubstituted $C_1$-$C_4$-alkyl and, if Y denotes a substituted or unsubstituted divalent aliphatic radical, together with R also represents alkylene, preferably $-CH_2CH_2-$, and, if W denotes an aliphatic radical, together with W optionally with the inclusion of a heteroatom can form a ring,

Y represents an optionally further substituted divalent aliphatic, araliphatic, cycloaliphatic or aromatic radical,

W represents H or an optionally further substituted aliphatic, araliphatic, cycloaliphatic or aromatic radical,

$R_1$ is a water-solubilizing group, such as a carboxyl or sulpho group, or is a sulphamoyl group which can be monosubstituted or disubstituted, the substituents preferably being alkyl groups having 1 to 4 C atoms, which can be substituted by a phenyl radical, and are phenyl radicals, where these radicals in turn can preferably contain water-solubilizing groups, or is a disulphimido group $SO_2NHSO_2R_4$ where $R_4$ represents a substituted or unsubstituted $C_1$-$C_4$-alkyl radical or a phenyl radical, or is a sulphone group $-SO_2R_4$,

$R_2$ and $R_3$ represent H, $C_1$-$C_4$-alkyl, $C_1$-$C_4$-alkoxy, carboxyl, F, Cl or Br
and where

the radicals $SO_2B$ and $R_1$ are each in the o-position relative to the substituent $X_1$-W or

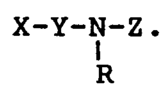

**2.** Dyestuffs of Claim 1, in which
$T_1$ and $T_2$ are Cl
X and $X_1$ are NH
R is H
$R_1$ is $SO_3H$
$R_2$ and $R_3$ are H
B is $CH_2$-$CH_2$-$OSO_3H$
W is $C_2$-$C_4$-alkyl which is substituted by $OSO_3H$
Z is the radical of a reactive component of the monofluoro- or monochlorotriazine series or is 2,4-difluoro-5-chloro-6-pyrimidinyl
Y is $C_2$-$C_4$-alkylene.

**3.** Dyestuffs of Claim 1 of the formula

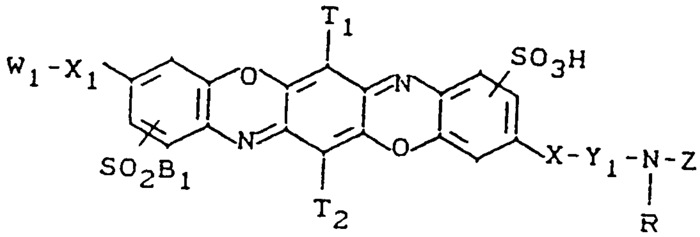

(3)

in which
$T_1$, $T_2$, R, X and Z have the meaning mentioned in Claim 1 and
$B_1$ is $CH_2$-$CH_2OSO_3H$
$Y_1$ is an aliphatic or araliphatic radical
$W_1$ is an aliphatic or araliphatic radical.

**4.** Dyestuffs of Claim 1 of the formula

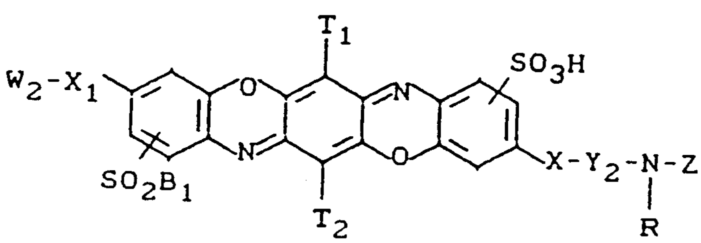

(4)

in which
$T_1$, $T_2$, $R_1$ X, Z and $B_1$ have the meaning mentioned and
$Y_2$ is an aliphatic radical
$W_2$ is an aliphatic radical.

**5.** Dyestuffs of Claim 4, in which

$Y_2$ is $-CH_2-CH_2-$, $-CH_2-CH_2-CH_2-CH_2-$, $-CH_2-CH_2-CH_2-$, $-CH_2-CH(CH_3)-$

$W_2$ is $-CH_2-CH_2-OSO_3H$, $-CH_2-CH(OSO_3H)-CH_3$

**6.** Dyestuffs of Claim 4, in which
$T_1$ and $T_2$ are Cl
X and $X_1$ are NH
R is H

Z is 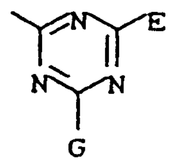

in which
G is F or Cl and
E denotes a substituted or unsubstituted amino group, if G is F, and
if G is Cl, is an ether or thioether group of the formulae
$-OR_5$ or $-SR_5$,
where
$R_5$ is substituted or unsubstituted $C_1$-$C_6$-alkyl or substituted or unsubstituted aryl, or is a substituted or unsubstituted amino group.

**7.** Dyestuffs of Claim 6, in which
E is

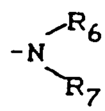

in which

$R_6$ is hydrogen or substituted or unsubstituted $C_1$-$C_6$-alkyl

$R^7$ is hydrogen or substituted or unsubstituted $C_1$-$C_6$-alkyl, $C_5$-$C_8$-cycloalkyl or substituted or unsubstituted aryl or $R_6$ and $R_7$ with the inclusion of a further heteroatom optionally form a heterocyclic ring.

**8.** Mixtures of dyestuffs of the formula

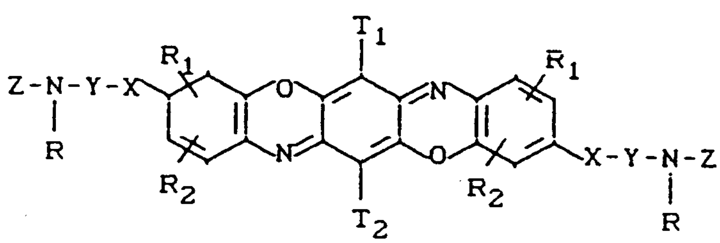

(1a)

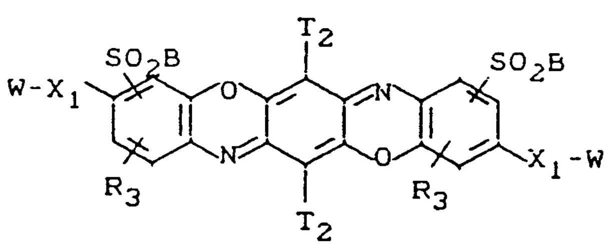

(1b)

with dyestuffs of Claim 1 of the formula (2), in which $T_1$, $T_2$, $R_1$, $R_2$, X, Y, R, Z, $X_1$, W, $R_3$ and B have the meaning given in Claim 1.

**9.** Mixtures of the dyestuffs (1a), (1b) and (2) according to Claim 8 in a molar percentage ratio 30-70:35-15:35-15, in particular 40-60:30-20:30-20.

**10.** Use of the dyestuffs of Claims 1-9 for the dyeing and printing of hydroxyl- and amido-containing materials.

**11.** Hydroxyl- or amido-containing materials dyed or printed with the dyestuffs of Claims 1-9.

## Revendications

**1.** Colorants de triphénodioxazines de formule

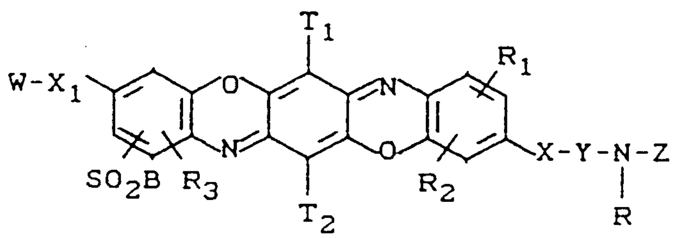

(2)

dans laquelle
$B = CH=CH_2$ ou $CH_2CH_2V$,
dans lequel
V = substituant éliminable tel que $OSO_3H$, Cl, $S_2O_3H$, $OCOCH_3$, $OPO_3H_2$, $^{\oplus}N(CH_3)_3$
R = H ou alkyle en $C_1$-$C_4$ éventuellement substitué,
Z = groupe réactif avec les fibres,
$T_1$ et $T_2$ représentent H, Cl, Br, alcoxy en $C_1$-$C_4$, alkyle en $C_1$-$C_4$, phényle ou phénoxy éventuellement substitué, $T_1$ et $T_2$ ayant de préférence la même signification,
X et $X_1$ représentent O, S ou

$$\underset{R''}{\underset{|}{N}},$$

R" représente l'hydrogène ou un groupe alkyle en $C_1$-$C_4$ éventuellement substitué, et peut encore, lorsque Y représente un groupe aliphatique divalent éventuellement substitué, former avec R un groupe alkylène, de préférence $-CH_2CH_2-$, et, lorsque W représente un groupe aliphatique, former avec W, éventuellement avec inclusion d'un hétéroatome, un cycle,
Y représente un groupe aliphatique, araliphatique, cycloaliphatique ou aromatique divalent, portant éventuellement d'autres substituants,
W représente H ou un groupe aliphatique, araliphatique, cycloaliphatique ou aromatique portant éventuellement d'autres substituants,
$R_1$ représente un groupe hydrosolubilisant tel qu'un groupe carboxy ou sulfo ou un groupe sulfamoyle qui peut être mono- ou di-substitué, les substituants étant de préférence des groupes alkyle en $C_1$-$C_4$ qui peuvent être substitués par un groupe phényle, et des groupes phényle, ces groupes pouvant contenir eux-mêmes de préférence des groupes hydrosolubilisants, ou un groupe disulfimide $SO_2NHSO_2R_4$ dans lequel $R_4$ représente un groupe alkyle en $C_1$-$C_4$ ou phényle éventuellement substitué, ou un groupe sulfone $-SO_2R_4$,
$R_2$ et $R_3$ représentent H, des groupes alkyle en $C_1$-$C_4$, alcoxy en $C_1$-$C_4$, carboxy, F, Cl ou Br,
les groupes $SO_2B$ et $R_1$ étant respectivement en position ortho des substituants $X_1$-W et

$$X-Y-\underset{R}{\underset{|}{N}}-Z.$$

**2.** Colorants de la revendication 1 pour lesquels
$T_1$ et $T_2$ = Cl
X et $X_1$ = NH

R = H
$R_1$ = $SO_3H$
$R_2$ et $R_3$ = H
B = $CH_2$-$CH_2$-$OSO_3H$
W = alkyle en $C_2$-$C_4$ qui est substitué par $OSO_3H$
Z = radical d'un composant réactif de la série des monofluoro- ou monochlorotriazines ou un groupe 2,4-difluoro-5-chloropyrimidinyle-6,
Y = alkylène en $C_2$-$C_4$.

**3.** Colorants de la revendication 1, de formule

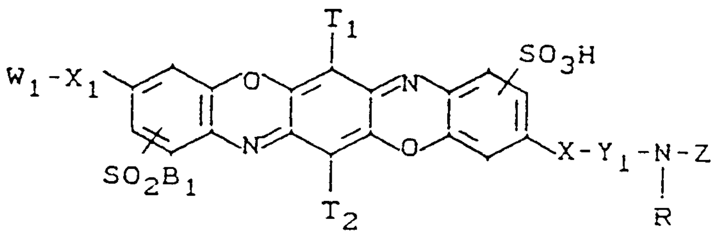

(3)

dans laquelle
$T_1$, $T_2$, R, X et Z ont les significations indiquées dans la revendication 1 et
$B_1$ = $CH_2$-$CH_2OSO_3H$
$Y_1$ = groupe aliphatique ou araliphatique
$W_1$ = groupe aliphatique ou araliphatique.

**4.** Colorants de la revendication 1, de formule

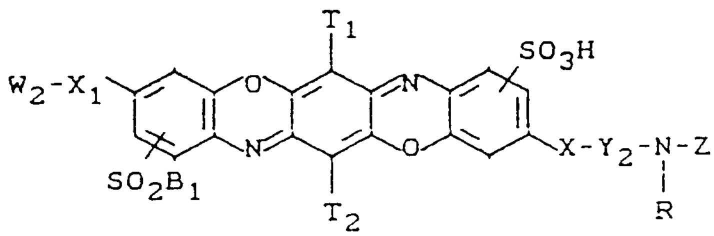

(4)

dans laquelle
$T_1$, $T_2$, R, X, Z et $B_1$ ont les significations indiquées ci-dessus et
$Y_2$ = groupe aliphatique
$W_2$ = groupe aliphatique.

**5.** Colorants de la revendication 4, pour lesquels

$Y_2$ = $-CH_2-CH_2-$, $-CH_2-CH_2-CH_2-CH_2-$, $-CH_2-CH_2-CH_2-$,
$-CH_2-CH-$
$\quad\quad\quad |$
$\quad\quad\quad CH_3$

$W_2$ = $-CH_2-CH_2-OSO_3H$, $-CH_2-CH-CH_3$ .
$\quad\quad\quad\quad\quad\quad\quad\quad\quad\quad\quad\quad\quad\quad |$
$\quad\quad\quad\quad\quad\quad\quad\quad\quad\quad\quad\quad\quad\quad OSO_3H$

**6.** Colorants de la revendication 4, pour lesquels
$T_1$ et $T_2$ = Cl
X et $X_1$ = NH
R = H

Z = 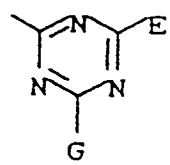

dans lequel
G = F ou Cl et
E, dans le cas où G = F, représente un groupe amino éventuellement substitué, et, dans le cas où G = Cl, représente un groupe éther ou thioéther de formule
$-OR_5$ ou $-SR_5$
dans laquelle
$R_5$ = alkyle en $C_1$-$C_6$ éventuellement substitué ou aryle éventuellement substitué, ou bien un groupe amino éventuellement substitué.

**7.** Colorants de la revendication 6 pour lesquels

E = 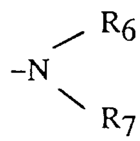

avec
$R_6$ = hydrogène ou alkyle en $C_1$-$C_6$ éventuellement substitué,
$R_7$ = hydrogène ou alkyle en $C_1$-$C_6$ éventuellement substitué, cycloalkyle en $C_5$-$C_8$ ou aryle éventuellement substitué, ou bien $R_6$ et $R_7$ forment ensemble, éventuellement avec inclusion d'un autre hétéroatome, un noyau hétérocyclique.

**8.** Mélanges de colorants de formules

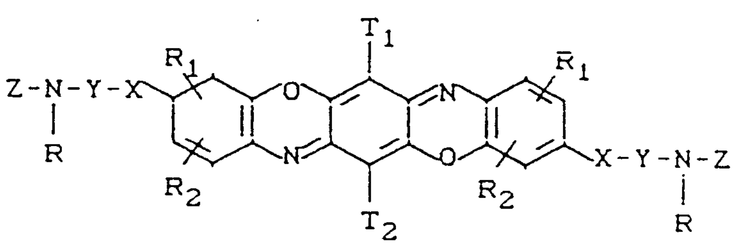

(1a)

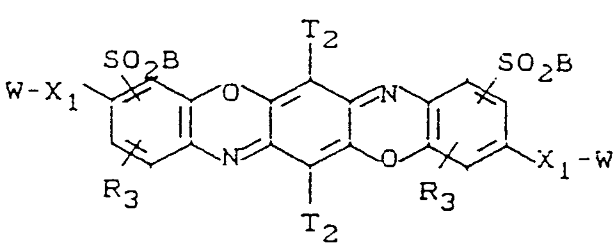

(1b)

avec des colorants de la revendication 1, répondant à la formule (2) dans laquelle $T_1$, $T_2$, $R_1$, $R_2$, X, Y, R, Z, $X_1$, W, $R_3$ et B ont les significations indiquées dans la revendication 1.

9. Mélanges des colorants (1a), (1b) et (2) de la revendication 8, dans des proportions molaires de 30 à 70 : 35 à 15 : 35 à 15, plus spécialement de 40 à 60 : 30 à 20 : 30 à 20.

10. Utilisation des colorants des revendications 1 à 9 pour la teinture et l'impression de matières contenant des groupes hydroxy et des groupes amide.

11. Matières contenant des groupes hydroxy ou des groupes amide, teintes ou imprimées à l'aide des colorants des revendications 1 à 9.